# FASCICULE DE BREVET EUROPEEN

(11) **EP 3 690 192 B1**
(45) Date de publication et mention de la délivrance du brevet: **10.05.2023**
(21) Numéro de dépôt: 20150739.9
(22) Date de dépôt: 08.01.2020
(51) Int. Cl.: F01D 11/00, F01D 5/06, F01D 11/02, F01D 11/12

(54) **ROTOR POUR COMPRESSEUR DE TURBOMACHINE AXIALE**
ROTOR FÜR EINEN KOMPRESSOR EINER AXIALEN TURBOMACHINE
ROTOR FOR AXIAL TURBOMACHINE COMPRESSOR

(30) Priorité: 04.02.2019 BE 201905063
(43) Date de publication de la demande: 05.08.2020
(73) Titulaire: Safran Aero Boosters SA, 4041 Herstal (BE)
(72) Inventeur: DERCLAYE, Alain, 4041 Herstal (BE)
(74) Mandataire: Lecomte & Partners

(56) Documents cités:
- EP-A1- 2 287 445
- EP-A1- 2 801 702
- WO-A1-2016/059348
- US-A- 5 632 600
- US-B1- 6 213 720

## Description

### Domaine technique

L'invention concerne la conception d'une turbomachine, notamment un turboréacteur d'avion ou un turbopropulseur d'aéronef avec une soufflante entraînée par un réducteur. L'invention a en particulier trait à un rotor de compresseur composé de plusieurs parties dont un tambour en matériau composite.

### Technique antérieure

Le document EP 2 818 635 A1 décrit un rotor de compresseur pour turbomachine. Un tambour y est agencé, supportant plusieurs rangées annulaires d'aubes rotoriques dont au moins une aube est monobloc avec le rotor. Cette conception hybride permet un gain de temps lors de la production et de l'assemblage car toutes les aubes ne sont pas monoblocs avec le tambour. Cependant une telle conception peut être améliorée d'un point de vue du poids du rotor. Le poids est un aspect néfaste pour un rotor de compresseur non seulement du fait qu'il nécessite plus d'énergie pour être mis en rotation, réduisant d'autant le rendement du moteur, mais aussi car il va, à sa mesure, participer au poids de l'aéronef et donc au besoin en carburant nécessaire au mouvement de l'aéronef.

Le document EP 2 287 445 A1 décrit un rotor de compresseur composé de segments en matériau composite et de couronnes métalliques. Ces dernières sont pourvues de rainures en queues d'aronde pour recevoir des aubes rotoriques.

Une telle conception peut présenter des hétérogénéités dans la distribution du poids axialement car les queues d'arondes nécessitent des couronnes métalliques massives. Aussi, il demeure une marge d'amélioration en ce qui concerne l'encombrement général et le poids global du rotor.

Le taillage ou l'usinage des queues d'arondes présente également l'inconvénient du temps et du coût de fabrication.

### Résumé de l'invention

### Problème technique

L'invention a pour objectif de proposer un rotor plus léger et dont la fabrication et l'assemblage sont plus économiques.

### Solution technique

L'invention a pour objet un rotor pour compresseur de turbomachine axiale, tel un turboréacteur d'aéronef, comprenant : une pluralité de segments, de forme sensiblement axisymétrique et faits de matériau composite ; une pluralité de rangées annulaires d'aubes rotoriques, chaque rangée d'aubes étant supportée par une couronne respective, métallique et interposée axialement entre deux segments de la pluralité de segments, remarquable en ce que chaque couronne a une section avec une branche axiale chevauchant axialement partiellement les deux segments, la branche axiale étant disposée radialement à l'extérieur des segments, et les couronnes étant reliées deux à deux uniquement par l'intermédiaire d'un des segments.

Un tambour est ainsi formé par la succession, selon un axe, de segments et de couronnes qui ne se chevauchent que partiellement et qui forment un ensemble mécaniquement résistant. Le démontage de l'un des éléments (segment ou couronne) rompt le tambour.

Selon des modes avantageux de l'invention, le rotor peut comprendre une ou plusieurs des caractéristiques suivantes, prises isolément ou selon toutes les combinaisons techniques possibles :
- la section est en T, comprenant une branche radiale, chacun des deux segments ayant une terminaison s'étendant radialement et agencée en appui sur la branche radiale de la couronne ;
- une vis ou un rivet sensiblement axial(e) traverse la branche radiale de la couronne et la terminaison de chacun des deux segments ;
- la branche radiale a une extrémité radiale interne qui comprend une surépaisseur axiale en saillie en amont et en aval de la branche radiale, la surépaisseur définissant deux surfaces radialement externes de centrage des terminaisons des deux segments sur la couronne ;
- la section est en π, comprenant deux branches radiales, chacun des deux segments ayant une terminaison s'étendant radialement et agencée en appui sur une des branches radiales respective de la couronne ;
- la branche axiale dispose d'une surface interne de centrage des deux segments.
- les segments ont une section en U, ouvert radialement vers l'intérieur ou vers l'extérieur ;
- les segments ont une surface externe qui décrit un renfoncement muni de léchettes métalliques radialement en saillie du renfoncement.

L'invention a également trait à un compresseur de turbomachine comprenant un rotor selon l'un des modes de réalisation exposés ci-dessus et au moins une rangée d'aubes statoriques agencée axialement entre deux rangées annulaires d'aubes rotoriques successives, les aubes statoriques étant supportées par une virole interne chevauchant axialement un segment, et un joint d'étanchéité étant disposé entre la virole interne et le segment.

Selon des modes avantageux de l'invention, le compresseur peut comprendre une ou plusieurs des caractéristiques suivantes, prises isolément ou selon toutes les combinaisons techniques possibles :
- le joint est fait de léchettes métalliques annulaires sur la virole interne coopérant avec des anneaux de matériau abradable agencés sur le segment ;
- le segment comprend un renfoncement et les anneaux d'abradable sont agencés aux extrémités axiales du renfoncement ;
- le joint est un joint à brosse muni de poils, chacun des poils étant fixé à une de ses extrémités à la virole interne et glissant à son autre extrémité sur le segment ;
- le joint est un joint annulaire de section en J, définissant une branche principale et une branche auxiliaire, la branche principale du J étant fixée au segment et la branche auxiliaire glissant sur un patin annulaire de la virole interne. Alternativement, le joint peut être fixé à la virole et glisser sur le segment ;
- le joint en J est un premier joint et le patin annulaire est un premier patin, disposés en amont de la virole interne, un second joint en J et un second patin annulaire étant disposés en aval de la virole interne ;
- une vis axiale maintient la branche principale du joint au segment et à la couronne, en particulier à la terminaison du segment et à la branche radiale de la couronne.

### Avantages apportés

La conception hybride du rotor selon l'invention permet des gains substantiels en poids comparé à un rotor disposant d'un tambour complètement métallique. Comparé à un rotor monobloc, le temps de fabrication est drastiquement réduit, car plusieurs éléments peuvent être fabriqués en parallèle avant d'être montés ensemble. Aussi, la répartition axiale du poids du rotor est plus homogène.

### Brève description des dessins

La figure 1 représente une turbomachine axiale ;
La figure 2 représente une vue en coupe schématique d'une partie d'un compresseur de l'état de l'art ;
La figure 3 représente une vue en coupe du rotor selon un premier mode de réalisation de l'invention ;
La figure 4 montre une vue en coupe du rotor selon un deuxième mode de réalisation de l'invention ;
La figure 5 illustre une vue en coupe du rotor selon un troisième mode de réalisation de l'invention ;
La figure 6 représente une vue en coupe du rotor selon un quatrième mode de réalisation de l'invention ;
La figure 7 illustre une vue en coupe du rotor selon un cinquième mode de réalisation de l'invention ;
La figure 8 montre une vue en coupe du rotor selon un sixième mode de réalisation de l'invention ;
La figure 9 représente une vue en coupe du rotor selon un septième mode de réalisation de l'invention.

### Description des modes de réalisation

Dans la description qui va suivre, les termes « interne » (ou « intérieur ») et « externe » (ou « extérieur ») renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine. Le terme « solidaire » est compris comme solidaire en rotation, et notamment rigidement lié. Le terme « monobloc » est équivalent à « venu de matière » et désigne différents éléments réalisés dans un même bloc de matière, par opposition à « rapporté » qui signifie qu'un élément est rattaché, après sa fabrication, à un autre élément. Les figures représentent les éléments de manière schématique, notamment sans l'intégralité des éléments d'assemblage ou d'étanchéité. Les dimensions et notamment l'épaisseur radiale, sont exagérées afin de faciliter la compréhension des figures.

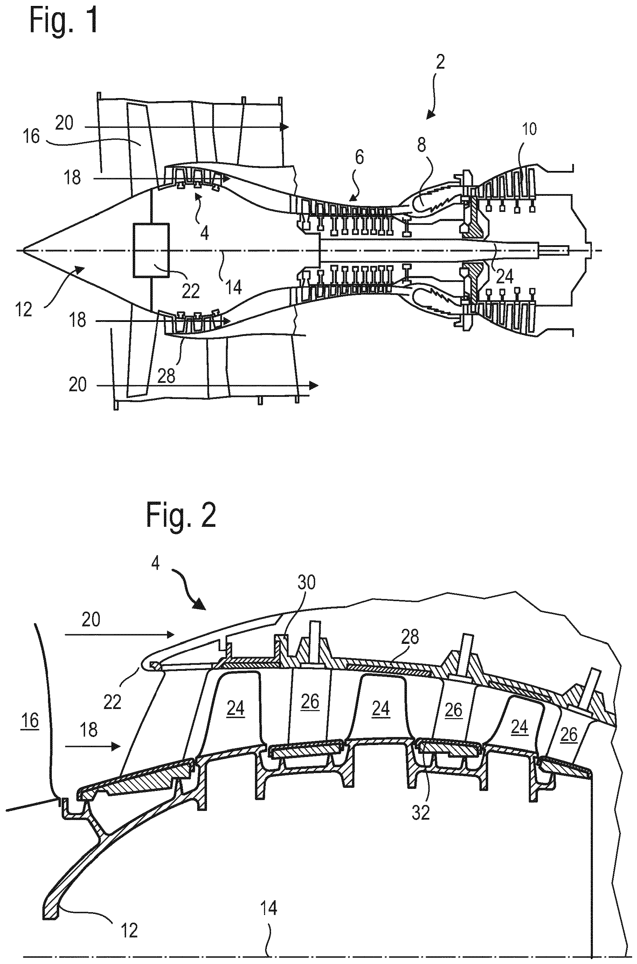

La figure 1 représente de manière simplifiée une turbomachine axiale 2. Le turboréacteur 2 comprend un premier compresseur, basse-pression 4 et un deuxième compresseur, haute-pression 6, une chambre de combustion 8 et une ou plusieurs turbines 10. En fonctionnement, la puissance mécanique de la turbine 10 transmise au rotor 12 met en mouvement les deux compresseurs 4 et 6. Ces derniers comportent plusieurs rangées d'aubes de rotor associées à des rangées d'aubes de stator. La rotation du rotor autour de son axe de rotation 14 permet ainsi de générer un débit d'air et de comprimer progressivement ce dernier jusqu'à l'entrée de la chambre de combustion 8.

Une soufflante 16 est couplée au rotor 12 et génère un flux d'air qui se divise en un flux primaire 18 et en un flux secondaire 20 traversant un conduit annulaire (partiellement représenté) le long de la machine pour ensuite rejoindre le flux primaire en sortie de turbine.

Des moyens de démultiplication, tel un réducteur épicycloïdal 22, peuvent réduire la vitesse de rotation de la soufflante et/ou du compresseur basse-pression par rapport à la turbine associée. Le flux secondaire peut être accéléré de sorte à générer une réaction de poussée nécessaire au vol d'un avion.

La figure 2 est une vue en coupe d'un compresseur d'une turbomachine axiale connu. Le compresseur peut comprendre un compresseur basse-pression 4. On peut y observer une partie du fan 16 ainsi que le bec de séparation 22 des flux primaire 18 et secondaire 20. Le rotor 12 peut comprendre plusieurs rangées d'aubes rotoriques 24.

Le compresseur basse-pression 4 comprend au moins un redresseur qui contient une rangée annulaire d'aubes statoriques 26. Chaque redresseur est associé au fan 16 ou à une rangée d'aubes rotoriques 24 pour en redresser le flux d'air.

Le compresseur basse-pression 4 comprend au moins un carter 28. Le carter 28 peut présenter une forme généralement circulaire ou tubulaire. Il peut être un carter externe de compresseur et peut être en matériaux composites. Le carter 28 peut comprendre des brides de fixation 30, par exemple des brides annulaires de fixation 30 pour la fixation du bec de séparation 22 et/ou pour se fixer à un carter intermédiaire de soufflante de la turbomachine. Les brides annulaires 30 peuvent être en composite et comprendre des orifices de fixation (non représentés) pour permettre une fixation par boulons.

Grâce aux matériaux composites, le carter 28 peut mesurer entre 3 et 5 mm d'épaisseur pour un diamètre supérieur à 1 mètre.

Les aubes statoriques 26 s'étendent essentiellement radialement depuis le carter 28 jusqu'à des viroles internes 32.

Dans cet exemple de rotor connu, le rotor 12 est monobloc avec trois rangées annulaires d'aubes rotoriques 24 s'étendant radialement depuis le rotor 12 jusqu'au voisinage du carter 28.

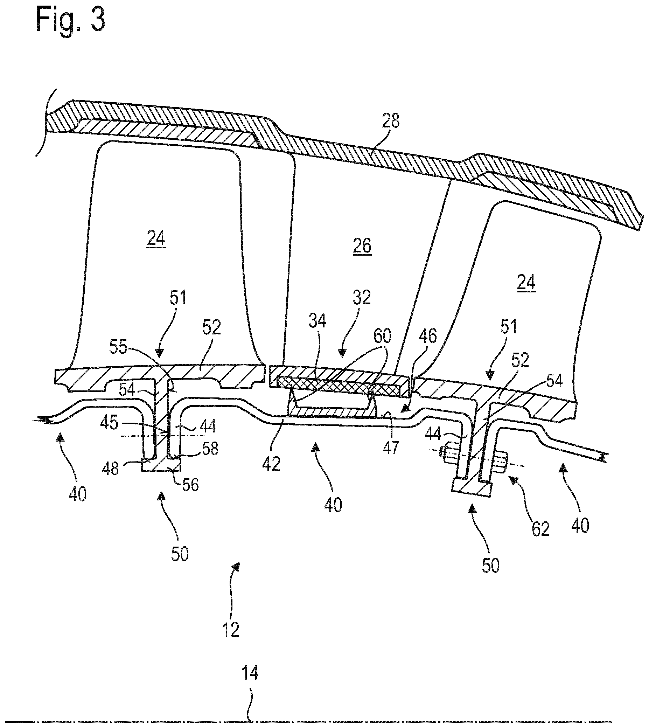

La figure 3 illustre en coupe partielle une partie d'un rotor 12 selon l'invention. Le rotor 12 comprend plusieurs segments 40 de matériaux composites. Le matériau composite peut être du type fibre de carbone avec matrice élastomère ou matrice organique. Chaque segment 40 est annulaire et dispose d'une portion centrale 42 sensiblement tubulaire et de deux terminaisons 44 s'étendant radialement. Sur l'exemple de la figure 3, les terminaisons 44 s'étendent radialement vers l'intérieur, formant avec la portion centrale 42 un profil en U ouvert vers l'intérieur.

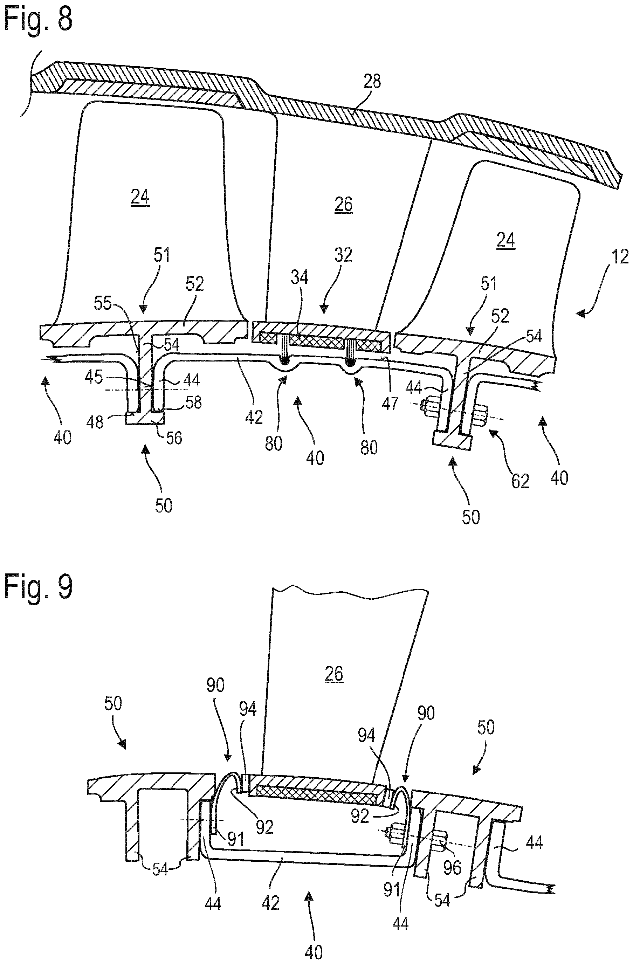

Le rotor 12 comprend également des couronnes 50 interposées entre les segments 40. Les couronnes 50 sont annulaires et faites de matériau métallique. Les couronnes 50 ont une section 51, ayant au moins une branche s'étendant axialement 52 et au moins une branche s'étendant radialement 54. La section peut être en T ou en π (voir l'exemple de la figure 9). La branche axiale 52 surplombe ou chevauche au moins partiellement les segments 40. Par chevauchement, on entend qu'il y a une portion de la couronne 50 et une portion de chacun des segments 40 qui ont la même position axiale. La branche radiale 54 est au contact des terminaisons 44 des segments. Ainsi, une surface 55 de la branche radiale 54 vient arrêter et positionner les segments 40 sur une surface 45. Le contact entre la surface 55 et la surface 45 est axial.

La branche radiale 54 se termine radialement intérieurement par une surépaisseur 56. Celle-ci présente des surfaces 58 qui permettent le centrage des segments 40 par leur contact avec des surface 48 radialement interne des terminaisons 44.

Les segments 40 peuvent être munis d'un renfoncement 46 aménagé sur leur surface extérieure 47. Celui-ci peut être sous la forme d'une rainure annulaire. Dans ce renfoncement 46 sont aménagés des léchettes métalliques 60 qui peuvent de servir de joint d'étanchéité. Les léchettes 60 viennent en saillie d'un anneau métallique fixé au segment composite 40. Ces léchettes 60 coopèrent avec une couche d'abradable 34 aménagée intérieurement à la virole interne 32 qui supporte les aubes statoriques 26.

La branche axiale 52 supporte les aubes rotoriques 24. Les aubes 24 peuvent être soudées à la branche axiale 52. Alternativement, les aubes 24 sont monoblocs avec la couronne 50. L'ensemble peut être obtenu, au moins partiellement, par fonderie puis usinage.

Une rangée annulaire d'éléments de visserie tels des vis axiales 62 peut être prévue pour assembler une couronne 50 à deux segments 40.

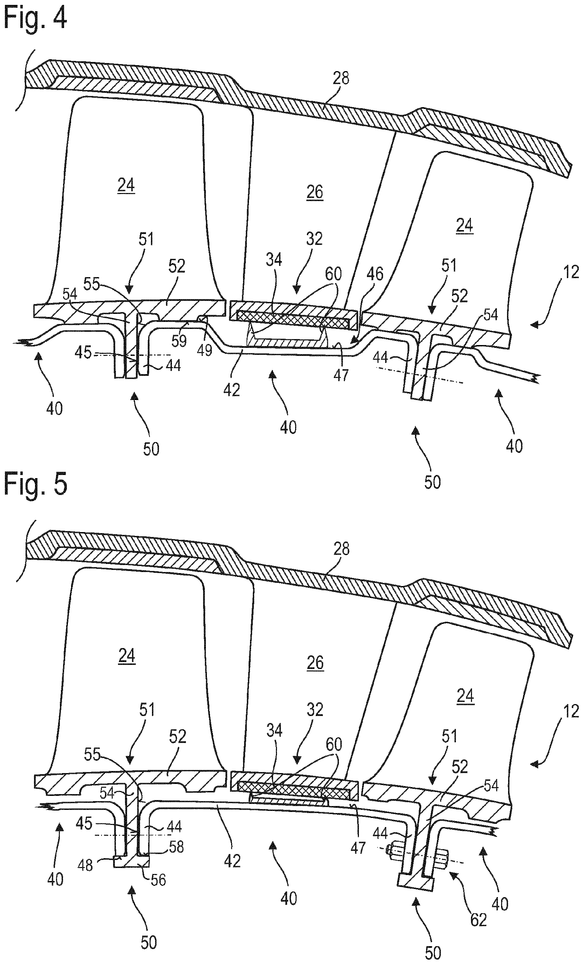

La figure 4 décrit un mode de réalisation alternatif du rotor 12 de la figure 3. Dans cet exemple, le centrage des segments 40 sur la couronne 50 (ou de la couronne 50 sur les segments 40) est réalisé par une surface 49 extérieure au segment 40 au contact d'une surface 59 intérieure de la branche axiale 52 de la couronne 50.

La figure 5 décrit un mode de réalisation alternatif du rotor 12 de la figure 3. Dans cet exemple, la portion centrale 42 des segments 40 est dépourvue de renfoncement et présente donc une surface régulière telle un cône, un cylindre, ou un arc d'ellipsoïde.

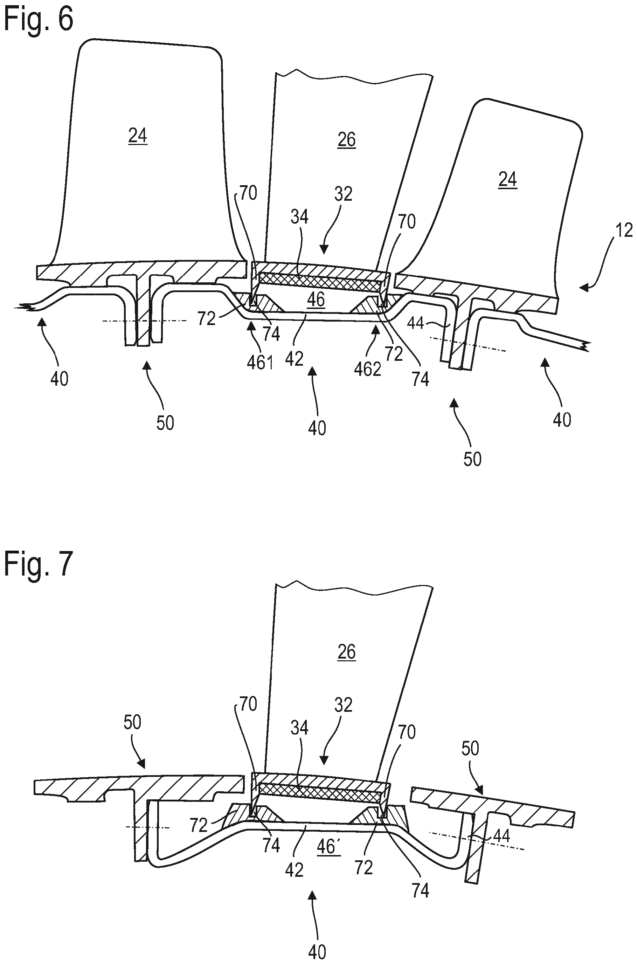

La figure 6 décrit un mode de réalisation alternatif du rotor 12 de la figure 3. A l'inverse de la figure 3, dans cet exemple, les léchettes métalliques 70 sont portées par la virole interne 32 et des anneaux 72 de matériau abradable sont pourvus de rainures annulaires 74 qui coopèrent avec les léchettes métalliques 70. Le renfoncement 46 a deux extrémités axiales 461, 462 et les anneaux 72 sont préférablement disposés à ces extrémités axiales 461, 462.

La figure 7 décrit un autre exemple de conception du rotor 12. Dans cet exemple, le profil des segments 40 est en U ouvert vers l'extérieur. Des léchettes métalliques 70 coopèrent avec des anneaux 72 qui peuvent être disposés sur une bosse 46' du segment 40.

La figure 8 représente un rotor 12 semblable aux figures précédentes avec un joint d'étanchéité réalisé différemment. Dans cet exemple, le joint d'étanchéité est un joint à brosse 80. Une multitude de poils s'étend radialement sur chacun des joints 80. Les poils ont une extrémité attachée au segment 40 et une autre extrémité qui glisse sur la couche d'abradable 34. Alternativement, les poils peuvent être attachés à la couche abradable 34 à l'une de leurs extrémités et peuvent glisser sur une couche d'abradable agencée sur le segment 40.

La figure 9 représente un mode de réalisation alternatif. Cet exemple illustre une autre variante pour le joint d'étanchéité entre la virole et les segments. Cet exemple illustre également une section différente pour la couronne. Une telle conception de joint n'est pas liée à une telle conception de couronne.

Ainsi, la figure 9 illustre une couronne de section en forme de lettre grecque π, c'est-à-dire avec une branche axiale 52 et deux branches radiales 54. Chacune des branches radiales d'une couronne est au contact d'une terminaison radiale 44 d'un segment 40.

Un joint 90 de section en J est prévu entre le segment 40 (en particulier entre ses terminaisons radiales 44) et la virole statorique 32. Le joint 90 comprend une branche principale 91 fixée au segment 40 et une branche auxiliaire 92 glissant sur un patin annulaire 94 fixé à la virole. Des vis 96 peuvent être prévues pour fixer la branche principale 91 au segment 40.

Les différentes figures montrent plusieurs modes de réalisation possibles pour les segments, pour les couronnes et pour les joints. L'homme du métier remarquera que ces trois éléments (segment, couronne, joint) sont interchangeables d'une figure à une autre : notamment, chaque type de joint peut être utilisé avec chaque type de segment et de couronne. La portée de l'invention est définie par les revendications annexées.

## Revendications

1. Rotor (12) pour compresseur (4, 6) de turbomachine axiale (2), tel un turboréacteur d'aéronef, comprenant :
- une pluralité de segments (40), de forme sensiblement axisymétrique et faits de matériau composite ;
- une pluralité de rangées annulaires d'aubes rotoriques (24), chaque rangée d'aubes (24) étant supportée par une couronne (50) respective, métallique et interposée axialement entre deux segments (40) de la pluralité de segments (40) ;
chaque couronne (50) ayant une section (51) avec une branche axiale (52) chevauchant axialement partiellement les deux segments (40), les couronnes (50) étant reliées deux à deux uniquement par l'intermédiaire d'un des segments (40);
**caractérisé en ce que** la branche axiale (52) est disposée radialement à l'extérieur des segments (40).

2. Rotor (12) selon la revendication 1, **caractérisé en ce que** la section (51) est en T (51), comprenant une branche radiale (54), chacun des deux segments (40) ayant une terminaison (44) s'étendant radialement et agencée en appui sur la branche radiale (54) de la couronne (50).

3. Rotor (12) selon la revendication précédente, **caractérisé en ce qu'**une vis (62) ou un rivet sensiblement axial(e) traverse la branche radiale (54) de la couronne (50) et la terminaison (44) de chacun des deux segments (40).

4. Rotor (12) selon la revendication 2 ou 3, **caractérisé en ce que** la branche radiale (54) a une extrémité radiale interne qui comprend une surépaisseur (56) axiale en saillie en amont et en aval de la branche radiale (54), la surépaisseur (56) définissant deux surfaces (58) radialement externes de centrage des terminaisons (44) des deux segments (40) sur la couronne (50).

5. Rotor (12) selon la revendication 1, **caractérisé en ce que** la section (51) est en π, comprenant deux branches radiales (54), chacun des deux segments (40) ayant une terminaison (44) s'étendant radialement et agencée en appui sur une des branches radiales (54) respective de la couronne (50).

6. Rotor (12) selon l'une des revendications 1 à 3 ou 5, **caractérisé en ce que** la branche axiale (52) dispose d'une surface interne (59) de centrage des deux segments (40).

7. Rotor (12) selon l'une des revendications précédentes, **caractérisé en ce que** les segments (40) ont une section en U, ouvert radialement vers l'intérieur ou vers l'extérieur.

8. Rotor (12) selon l'une des revendications précédentes, **caractérisé en ce que** les segments (40) ont une surface externe qui décrit un renfoncement (46) muni de léchettes métalliques (60) radialement en saillie du renfoncement (46).

9. Compresseur (4, 6) comprenant :
- un rotor (12) selon l'une des revendications 1 à 8 ;
- au moins une rangée d'aubes statoriques (26) agencée axialement entre deux rangées annulaires d'aubes rotoriques (24) successives,
les aubes statoriques (26) étant supportées par une virole interne (32) chevauchant axialement un segment (40), et un joint d'étanchéité (34, 60, 70, 80, 90) étant disposé entre la virole interne (32) et le segment (40).

10. Compresseur (4, 6) selon la revendication 9, **caractérisé en ce que** le joint d'étanchéité (70) est fait de léchettes métalliques (70) annulaires sur la virole interne (32) coopérant avec des anneaux (72) de matériau abradable agencés sur le segment (40).

11. Compresseur (4, 6) selon la revendication 10, **caractérisé en ce que** le segment (40) comprend un renfoncement (46) et les anneaux d'abradable (72) sont agencés aux extrémités axiales (461, 462) du renfoncement (46).

12. Compresseur (4, 6) selon la revendication 9, **caractérisé en ce que** le joint d'étanchéité (80) est un joint à brosse (80) muni de poils d'étanchéité, chacun des poils étant fixé à une de ses extrémités à la virole interne (32) et glissant à son autre extrémité sur le segment (40).

13. Compresseur (4, 6) selon la revendication 9, **caractérisé en ce que** le joint (90) est un joint annulaire (90) de section en J, définissant une branche principale (91) et une branche auxiliaire (92), la branche principale (91) du J étant fixée au segment (40) et la branche auxiliaire (92) glissant sur un patin annulaire (94) de la virole interne (32).

14. Compresseur (4, 6) selon la revendication 13, **caractérisé en ce que** le joint (90) en J est un premier joint et le patin annulaire (94) est un premier patin, disposés en amont de la virole interne (32), un second joint (90) en J et un second patin annulaire (94) étant disposés en aval de la virole interne (32).

15. Compresseur (4, 6) selon la revendication 13 ou 14, **caractérisé en ce qu'**une vis axiale (96) maintient la branche principale (91) du joint (90) au segment (40) et à la couronne (50), en particulier à la terminaison (44) du segment (40) et à la ou une des branche(s) radiale(s) (54) de la couronne (50).

## Patentansprüche

1. Rotor (12) für einen Verdichter (4, 6) einer axialen Turbomaschine (2), wie zum Beispiel eines Flugzeug-Turbotriebwerks, der Folgendes umfasst:
- eine Vielzahl von Segmenten (40), die eine im Wesentlichen asymmetrische Form haben und aus Verbundwerkstoff bestehen;
- eine Vielzahl von ringförmigen Reihen von Rotorschaufeln (24), wobei jede Reihe von Schaufeln (24) von einem metallischen Kranz (50) getragen wird, der axial zwischen zwei Segmenten (40) der Vielzahl von Segmenten (40) angeordnet ist;
wobei jeder Kranz (50) einen Abschnitt (51) mit einem axialen Zweig (52) aufweist, der sich in der axialen Ebene teilweise mit den beiden Segmenten (40) überlappt, wobei die Kränze (50) paarweise ausschliesslich durch eines der Segmente (40) verbunden sind,
**dadurch gekennzeichnet, dass** der axiale Zweig (52) radial außerhalb der Segmente (40) angeordnet ist.

2. Rotor (12) nach Anspruch 1, **dadurch gekennzeichnet, dass** der Abschnitt (51) T-förmig ist und einen radialen Zweig (54) aufweist, wobei jedes der beiden Segmente (40) einen sich radial erstreckenden Abschluss (44) aufweist, der so angeordnet ist, dass er auf dem radialen Zweig (54) des Kranzes (50) aufliegt.

3. Rotor (12) nach dem vorhergehenden Anspruch, **dadurch gekennzeichnet, dass** eine Schraube (62) oder ein wesentlicher axialer Niet durch den radialen Zweig (54) des Kranzes (50) und durch den Abschluss (44) jedes der beiden Segmente (40) verläuft.

4. Rotor (12) nach Anspruch 2 oder 3, **dadurch gekennzeichnet, dass** der radiale Zweig (54) ein radial inneres Ende mit einer axialen Verdickung (56) aufweist, die stromaufwärts und stromabwärts des radialen Zweigs (54) vorsteht, wobei die Verdickung (56) zwei radial äußere Flächen (58) zum Zentrieren der Abschlüsse (44) der beiden Segmente (40) auf dem Kranz (50) definiert.

5. Rotor (12) nach Anspruch 1, **dadurch gekennzeichnet, dass** der Abschnitt (51) *π*-förmig ist und zwei radiale Zweige (54) umfasst, wobei jedes der beiden Segmente (40) einen sich radial erstreckenden Abschluss (44) aufweist, der so angeordnet ist, dass er auf einem der jeweiligen radialen Zweige (54) des Kranzes (50) aufliegt.

6. Rotor (12) nach einem der Ansprüche 1 bis 3 oder 5, **dadurch gekennzeichnet, dass** der axiale Zweig (52) eine Innenfläche (59) aufweist, die die beiden Segmente (40) zentriert.

7. Rotor (12) nach einem der vorhergehenden Ansprüche, **dadurch gekennzeichnet, dass** die Segmente (40) einen radial nach innen oder außen offenen U-förmigen Querschnitt aufweisen.

8. Rotor (12) nach einem der vorhergehenden Ansprüche, **dadurch gekennzeichnet, dass** die Segmente (40) eine Außenfläche haben, die eine Vertiefung (46) beschreibt, die mit Metalldichtungen (60) versehen ist, die radial aus der Vertiefung (46) herausragen.

9. Ein Kompressor (4, 6) mit:
- einem Laufrad (12) nach einem der Ansprüche 1 bis 8;
- mindestens eine Reihe von Statorschaufeln (26), die axial zwischen zwei aufeinanderfolgenden ringförmigen Reihen von Rotorschaufeln (24) angeordnet sind wobei die Statorschaufeln (26) von einer inneren Hülse (32) getragen werden, der ein Segment (40) axial überlappt, und eine Dichtung (34, 60, 70, 80, 90) zwischen der inneren Hülse (32) und dem Segment (40) angeordnet ist.

10. Kompressor (4, 6) nach Anspruch 9, **dadurch gekennzeichnet, dass** die Dichtung (70) aus ringförmigen Metalldichtungen (70) an der inneren Hülse (32) gebildet ist, die mit Ringen (72) aus abrasivem Material zusammenwirken, die an dem Segment (40) angeordnet sind.

11. Kompressor (4, 6) nach Anspruch 10, **dadurch gekennzeichnet, dass** das Segment (40) eine Vertiefung (46) aufweist und die Ringe aus abrasivem Material (72) an den axialen Enden (461, 462) der Vertiefung (46) angeordnet sind.

12. Kompressor (4, 6) nach Anspruch 9, **dadurch gekennzeichnet, dass** die Dichtung (80) eine Bürstendichtung (80) ist, die mit Dichtungsborsten versehen ist, wobei jede der Borsten an einem Ende an der inneren Hülse (32) befestigt ist und am anderen Ende auf dem Segment (40) gleitet.

13. Kompressor (4, 6) nach Anspruch 9, **dadurch gekennzeichnet, dass** die Dichtung (90) eine ringförmige Dichtung (90) mit einem J-förmigen Abschnitt ist, der einen Hauptzweig (91) und einen Hilfszweig (92) definiert, wobei der Hauptzweig (91) des J-förmigen Abschnitts an dem Segment (40) befestigt ist und der Hilfszweig (92) auf einer ringförmigen Platte (94) der inneren Hülse (32) gleitet.

14. Kompressor (4, 6) nach Anspruch 13, **dadurch gekennzeichnet, dass** die J-förmige Dichtung (90) eine erste Dichtung und die ringförmige Platte (94) eine erste Platte ist, die stromaufwärts in Bezug auf die innere Hülse (32) angeordnet ist, wobei eine zweite J-förmige Dichtung (90) und eine zweite ringförmige Platte (94) stromabwärts in Bezug auf die innere Hülse (32) angeordnet sind.

15. Kompressor (4, 6) nach Anspruch 13 oder 14, **dadurch gekennzeichnet, dass** eine axiale Schraube (96) den Hauptzweig (91) der Dichtung (90) am Segment (40) und am Kranz (50), insbesondere am Ende (44) des Segments (40) und am radialen Zweig oder einem der radialen Zweige (54) des Kranzes (50) hält.

## Claims

1. A rotor (12) for a compressor (4, 6) of an axial turbomachine (2), such as an aircraft turbojet engine, comprising:
- a plurality of segments (40), substantially axisymmetric in shape and made of composite material;
- a plurality of annular rows of rotor blades (24), each row of blades (24) being supported by a respective ring (50), metallic and interposed axially between two segments (40) of the plurality of segments (40);
wherein each ring (50) has a section (51) with an axial branch (52) partially axially overlapping the two segments (40), the rings (50) being connected in pairs exclusively by means of one of the segments (40),
**characterised in that** the axial branch (52) is disposed radially outside the segments (40).

2. A rotor (12) according to claim 1, **characterised in that** the section (51) is T-shaped (51), comprising a radial leg (54), each of the two segments (40) having a radially extending termination (44) arranged to abut the radial leg (54) of the ring (50).

3. A rotor (12) according to the preceding claim, **characterised in that** a substantially axial screw (62) or rivet passes through the radial leg (54) of the ring (50) and the termination (44) of each of the two segments (40).

4. A rotor (12) according to claim 2 or 3, **characterised in that** the radial branch (54) has a radially inner end which comprises an axial thickening (56) projecting upstream and downstream of the radial branch (54), the thickening (56) defining two radially outer surfaces (58) for centring the terminations (44) of the two segments (40) on the ring gear (50).

5. A rotor (12) according to claim 1, **characterised in that** the section (51) is π-shaped, comprising two radial legs (54), each of the two segments (40) having a radially extending termination (44) arranged to abut a respective one of the radial legs (54) of the rim (50).

6. A rotor (12) according to any of claims 1 to 3 or 5, **characterised in that** the axial leg (52) has an internal surface (59) for centring the two segments (40).

7. A rotor (12) according to any of the preceding claims, **characterised in that** the segments (40) have a U-shaped cross-section, open radially inwards or outwards.

8. A rotor (12) according to any of the preceding claims, **characterised in that** the segments (40) have an outer surface which describes a recess (46) provided with metal lugs (60) radially projecting from the recess (46).

9. Compressor (4, 6) comprising:
- a rotor (12) according to one of claims 1 to 8;
- at least one row of stator vanes (26) arranged axially between two successive annular rows of rotor blades (24),
the stator vanes (26) being supported by an inner shroud (32) axially overlapping a segment (40), and a seal (34, 60, 70, 80, 90) being disposed between the inner shroud (32) and the segment (40).

10. A compressor (4, 6) according to claim 9, **characterised in that** the seal (70) is made of annular metal lips (70) on the inner shell (32) cooperating with rings (72) of abradable material arranged on the segment (40).

11. The compressor (4, 6) according to claim 10, **characterised in that** the segment (40) comprises a recess (46) and the abradable rings (72) are arranged at the axial ends (461, 462) of the recess (46).

12. The compressor (4, 6) of claim 9, **characterised in that** the seal (80) is a brush seal (80) with sealing bristles, each of the bristles being attached at one end to the inner ring (32) and sliding at the other end over the segment (40).

13. A compressor (4, 6) according to claim 9, **characterised in that** the seal (90) is an annular seal (90) of J-shaped section, defining a main branch (91) and an auxiliary branch (92), the main branch (91) of the J being fixed to the segment (40) and the auxiliary branch (92) sliding on an annular shoe (94) of the inner ring (32).

14. A compressor (4, 6) according to claim 13, **characterised in that** the J-seal (90) is a first seal and the annular shoe (94) is a first shoe, disposed upstream of the inner shell (32), a second J-seal (90) and a second annular shoe (94) being disposed downstream of the inner shell (32).

15. Compressor (4, 6) according to claim 13 or 14, **characterized in that** an axial screw (96) holds the main branch (91) of the seal (90) to the segment (40) and to the ring (50), in particular to the termination (44) of the segment (40) and to the radial branch(es) (54) of the ring (50).
